# EUROPÄISCHE PATENTSCHRIFT

(11) **EP 2 458 691 B1**
(45) Veröffentlichungstag und Bekanntmachung des Hinweises auf die Patenterteilung: **01.04.2015**
(21) Anmeldenummer: 11190349.8
(22) Anmeldetag: 23.11.2011
(51) Int. Cl.: H01R 13/52, H01R 43/00, H01R 13/66

(54) **Teilvergossenes Netzteil und Herstellungsverfahren**
Partially encapsulated power-supply unit and method of producing the same
Alimentation électrique partiellement surmoulée et procédé de fabrication

(30) Priorität: 26.11.2010 DE 102010052728
(43) Veröffentlichungstag der Anmeldung: 30.05.2012
(73) Patentinhaber: Friwo Geraetebau GmbH, 48346 Ostbevern (DE)
(72) Erfinder: Gausepohl, Heinz-Jürgen, 48155 Münster (DE); Yilmaz, Taner, 48151 Münster (DE)
(74) Vertreter: Grünecker, Kinkeldey, Stockmair & Schwanhäusser

(56) Entgegenhaltungen:
- US-A1- 2004 008 532
- US-B2- 7 789 696

## Beschreibung

Die vorliegende Erfindung bezieht sich auf ein Netzteil zum Versorgen eines Verbrauchers mit einer Niederspannung und insbesondere auf ein sogenanntes Steckernetzteil, bei dem Netzsteckerstifte unmittelbar an dem Gerät angeordnet sind, so dass das Netzteil im Betrieb an der Netzsteckdose gehalten ist.

Weiterhin bezieht sich die vorliegende Erfindung auf ein Herstellungsverfahren für ein derartiges Netzteil.

Netzteile, die einen Verbraucher mit Niederspannung versorgen, indem sie die Netzspannung mit Hilfe einer Spannungswandlereinheit in die benötigte Niederspannung transformieren, sind heutzutage weit verbreitet. Für bestimmte Anwendungen, wie beispielsweise das Aufladen eines Rasierapparats oder Epiliergeräts muss verlangt werden, dass das Netzteil in der feuchten Atmosphäre eines Badezimmers sicher arbeitet. Es muss hier die Schutzart IPX4 oder sogar IPX7 eingehalten werden.

Wie dies allgemein bekannt ist, bedeutet dieser sogenannte IP-Code (Eindringschutz, engl. "Ingress Protection" oder "International Protection") den Schutz gegen allseitiges Spritzwasser (IPX4) bzw. den Schutz gegen zeitweiliges Untertauchen (IPX7) gemäß der Norm DIN EN 60529 [DIN EN 60529 (VDE 0470-1):2000-09 *Schutzarten durch Gehäuse (IP-Code) (IEC 60529:1989 + A1:1999); Deutsche Fassung EN 60529:1991* + *A1:2000.* VDE-Verlag, Berlin]

Um eine Gehäuseabdichtung gemäß der Schutzart IPX7 zu erreichen, ist einerseits bekannt, den Netzsteckerkontakt, den Ausgangsanschluss und alle Bauteile des Netzteils in einem Gehäuse anzuordnen und dieses vollständig mit einem elektrisch isolierenden Gießharz auszufüllen. Eine Alternative zu einem derartigen Vollverguss ist das Versiegeln des Gehäuses mittels einer Ultraschallschweißnaht. Das Ultraschallschweißen stellt aber eine weniger prozesssichere Variante als der Vollverguss dar, da die Dichtigkeit abhängig von der Qualität der Schweißnaht ist und gewissen, nicht tolerierbaren Schwankungen unterliegen kann.

Der Vollverguss des Steckernetzteils hat demgegenüber den Nachteil, dass Gewicht und Materialaufwand vergleichsweise hoch werden und darüber hinaus das Ermitteln von Ausfallursachen dadurch erschwert wird, dass sämtliche Bauteile untrennbar durch das Gießharz umschlossen sind.

Die Druckschrift US 2004/0008532 A1 offenbart eine Leistungsversorgungsvorrichtung, bei der die Steckerstifte, die Schaltungsanordnung auf dem Schaltungsträger sowie die Niederspannungsleitung mit Zugentlastung in einer ersten Gehäuseschale angeordnet werden und anschließend vor dem Aufbringen eines Deckels ein Vollverguss der gesamten Anordnung mit einer Vergussmasse erfolgt.

Die Erfinder der vorliegenden Anmeldung haben außerdem erkannt, dass es durch das Umschließen sämtlicher Bauteile mit einem Gießharz zu Kriechströmen zwischen den elektrischen Komponenten kommen kann.

Die der vorliegenden Erfindung zugrunde liegende Aufgabe besteht daher darin, ein Netzteil und ein zugehöriges Herstellungsverfahren anzugeben, bei dem einerseits eine Schutzart eingehalten werden kann, die sich für einen Betrieb in einem Feuchtraum wie einem Badezimmer eignet, und bei dem sich andererseits die Herstellungskosten und die Komplexität deutlich reduzieren lassen.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei basiert die vorliegende Erfindung auf der Idee, ein Gehäuse mit einem Gehäusegrundelement und einem Deckelelement vorzusehen, wobei mindestens ein Netzsteckerkontakt in dem Gehäusegrundelement oder dem Deckelelement so gehalten ist, dass er in eine Netzsteckdose einsteckbar ist. Gemäß der vorliegenden Erfindung ist die Spannungswandlereinheit auf einem Schaltungsträger montiert, der in einer Steckrichtung des Netzsteckerkontakts so in dem Gehäusegrundelement angeordnet ist, dass ein definierter zu isolierender erster Bereich des Schaltungsträgers in einem von Wandungen des Gehäusegrundelements umschlossenen Vergussraum aufgenommen ist. Der Vergussraum des Gehäusegrundelements ist mit einer elektrisch isolierenden Vergussmasse gefüllt, so dass der zu isolierende erste Bereich des Schaltungsträgers von der Vergussmasse abgedeckt ist, während ein zweiter Bereich des Schaltungsträgers, auf dem das mindestens eine elektronische Bauelement angeordnet ist, unvergossen ist.

Gemäß dem erfindungsgemäßen Herstellungsverfahren wird darüber hinaus zuerst das Gehäusegrundelement bis zu dem gewünschten Pegel mit der Vergussmasse gefüllt und anschließend der Schaltungsträger eingeschoben.

Die erfindungsgemäße Lösung bietet zum einen den Vorteil, dass im Gegensatz zu dem Vollverguss deutlich weniger Vergussmasse benötigt wird und dadurch einerseits die Taktzeiten zur Herstellung der Ladegeräte sinken und andererseits Materialkosten und Gewicht eingespart werden können.

Darüber hinaus hat sich gezeigt, dass es von Vorteil ist, die elektronischen Bauteile einer Spannungswandlereinheit nicht vollständig von Gießharz zu umgeben, da hierdurch Kriechströme reduziert oder ganz vermieden werden können. Allerdings müssen nicht ausnahmslos alle Bauelemente unvergossen bleiben. Es kann auch vorteilhaft sein, bestimmte Bauteile und Anschlüsse innerhalb des Vergussraums anzuordnen.

Weiterhin ist die erfindungsgemäße Art des Vergusses im Hinblick auf ein "Design for Testability" vorteilhaft, da das Ermitteln von Ausfallursachen dadurch wesentlich erleichtert wird, dass die Platine nur partiell im Verguss steckt. Schließlich lässt sich auch die Entsorgung des erfindungsgemäßen Steckernetzteils nach Ablauf der Lebensdauer vereinfachen, da die Bauteile nicht unlösbar von der Vergussmasse umgeben sind.

Andererseits erlaubt die erfindungsgemäße Gehäusung eine sichere Versiegelung, beispielsweise gemäß der Schutzart IPX7, und ermöglicht dadurch die Verwendung des erfindungsgemäßen Netzteils auch in Feuchträumen oder im Freien.

Diese effiziente Abdichtung lässt sich insbesondere dadurch erreichen, dass ein Verbindungsbereich zwischen dem Gehäusegrundelement und dem Deckelelement in dem Vergussraum angeordnet ist, so dass im vollständig montierten Zustand der Verbindungsbereich durch die Vergussmasse versiegelt ist. Damit wird jede weitere Art von Verschweißen oder Verkleben unnötig und es können durch diese sehr stabile Verbindung der Gehäuseteile Auszugskräfte von 89 N oder mehr sicher realisiert werden.

Beispielsweise kann der Verbindungsbereich durch eine Rastverbindung gebildet sein, die verrastet wird, solange die Vergussmasse noch nicht ausgehärtet ist. Es können im Verbindungsbereich auch zusätzliche Verankerungsöffnungen vorgesehen sein, in welche die flüssige Vergussmasse eindringt, so dass sie im ausgehärteten Zustand für einen besonders sicheren Halt sorgt.

Dadurch, dass die Vergussmasse in das Gehäusegrundelement eingefüllt wird, bevor der Schaltungsträger montiert wird, kann eine besonders einfache und definierte Prozessführung erreicht werden. Es müssen keine aufwendigen Vorkehrungen zum Befüllen von schmalen Zwischenräumen getroffen werden und durch das Einschieben der Platine in die Vergussmasse können Luftblasen effektiv vermieden werden.

Die elektrische Verbindung des mindestens einen Netzsteckerkontakts und/oder des Ausgangsanschlusses mit der Platine erfolgt gemäß einer vorteilhaften Weiterbildung der vorliegenden Erfindung durch Steckkontakte, die im vollständig montierten Zustand in der Vergussmasse angeordnet und dadurch elektrisch isoliert sind. Diese Kontakte können beispielsweise durch Federkontakte gebildet sein, die bei Aufstecken durch eine schleifende Bewegung für optimale elektrische Kontaktgabe sorgt. Da die Vergussmasse zum Zeitpunkt der Montage des Schaltungsträgers noch nicht ausgehärtet ist, können, falls die Federkontakte innerhalb des Vergussraumes angeordnet sind, unerwünschte Vergussmassen-Schichten von den Netzsteckerstiften und/oder den Ausgangsanschlüssen im benötigten Kontaktbereich durch das Aufschieben der Federkontakte beseitigt werden. Dadurch kann eine gesicherte Kontaktgabe ermöglicht werden. Andererseits sind im vollständig montierten Zustand die Netzsteckerkontakte oder Ausgangsanschlüsse und die zugehörigen Federkontakte auf dem Schaltungsträger miteinander durch die Vergussmasse mechanisch fixiert, so dass auch heftige Zugbewegungen und Erschütterungen die elektrische Kontaktgabe nicht beeinflussen können.

Gemäß einer weiteren vorteilhaften Ausführungsform kann eine Halterung für eine Zugentlastung eines Ausgangsanschlusses vorgesehen sein, die innerhalb des Vergussraums angeordnet ist, so dass auch die Zugentlastung durch das dann ausgehärtete Material des Teilvergusses flüssigkeitsdicht versiegelt ist.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch Merkmale oder Merkmalskombinationen aus dem gezeigten und beschriebenen unterschiedlichen Ausführungsformen für sich eigenständige, erfinderische oder erfindungsgemäße Lösungen darstellen. Es zeigen:
- **Fig. 1**: eine explodierte, teilweise geschnittene Darstellung eines Netzteils gemäß einer ersten Ausführungsform;
- **Fig. 2**: eine perspektivische Darstellung des vollständig montierten Netzteils gemäß der ersten Ausführungsform;
- **Fig. 3**: eine teilweise geschnittene Darstellung des Netzteils aus Fig. 2;
- **Fig. 4**: eine geschnittene Darstellung des Netzteils aus Fig. 4;
- **Fig. 5**: ein Detail der Fig. 3;
- **Fig. 6**: ein Detail der Fig. 4;
- **Fig.7**: eine Draufsicht auf das montierte Schaltnetzteil der Fig. 2;
- **Fig.8**: eine perspektivische Ansicht eines Netzteils gemäß einer weiteren vorteilhaften Ausführungsform;
- **Fig.9**: eine explodierte, teilweise geschnittene Darstellung des Netzteils der Figur 8;
- **Fig.10**: eine teilweise geöffnete Darstellung des Gehäusegrundelements mit der Platine;
- **Fig.11**: eine Seitendarstellung des Grundelements vor Montage des Deckelelements;
- **Fig.12**: eine Seitenansicht des vollständig montierten Steckernetzteils von Figur 8.

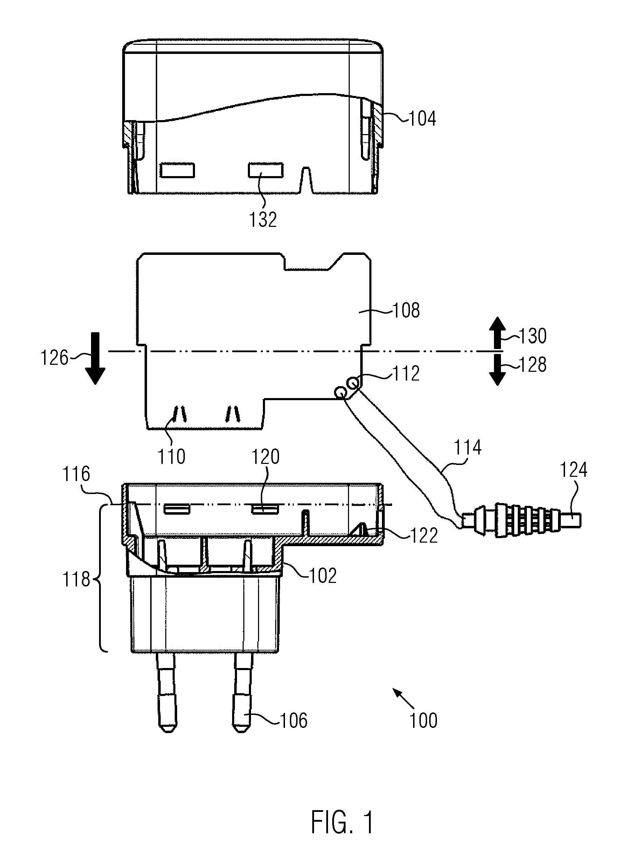

Die vorliegende Erfindung wird im Folgenden mit Bezug auf die Figuren genauer erläutert. Eine explodierte Ansicht des erfindungsgemäßen Netzteils 100 gemäß einer ersten vorteilhaften Ausführungsform ist in Fig. 1 skizziert. Erfindungsgemäß besitzt das Netzteil zum Versorgen eines Verbrauchers mit einer Niederspannung ein Gehäusegrundelement 102 und ein Deckelelement 104, die zusammengesteckt das Gehäuse des Netzteils 100 bilden. In dem Gehäusegrundelement 102 sind gemäß dieser Ausführungsform die Netzsteckerkontakte 106 angeordnet. In der gezeigten Ausführungsform handelt es sich um ein Steckernetzteil 100, das der europäischen Ländernorm genügt. Es ist für einen Fachmann aber selbstverständlich, dass die Netzsteckerkontakte 106 auch gemäß aller anderen gängigen Ländernormen ausgeführt sein können.

Ein Schaltungsträger 108, beispielsweise ein Printed Circuit Board, PCB, das nachfolgend auch als Leiterplatte bezeichnet wird, trägt die benötigten Bauteile für die Umwandlung der Netzspannung in die benötigte Niederspannung. Zum Kontaktieren der Netzsteckerkontakte 106 weist der Schaltungsträger 108 erste Kontakte 110 auf, die hier als steckbare Federkontakte ausgeführt sind. Diese ersten Kontakte 110 befinden sich auf der Primärseite der auf dem Schaltungsträger 108 angeordneten Spannungswandlereinheit (aus Gründen der Übersichtlichkeit in der Zeichnung nicht dargestellt). Die auf der Sekundärseite befindlichen zweiten Kontakte 112 dienen der Verbindung zu dem Ausgangsanschluss 114.

Erfindungsgemäß wird für die Montage das Gehäusegrundelement 102 mit den darin montierten Netzsteckerkontakten 106 bis zur Einfüllmarkierung 116 befüllt. Gemäß der vorliegenden Erfindung definiert das Gehäusegrundelement 102 auf diese Weise einen Vergussraum 118, der mit einer Vergussmasse verfüllt ist. Die Einfüllhöhe kann dabei optisch markiert sein oder durch die Dosiermenge der Vergussmasse festgelegt werden.

Innerhalb des Vergussraumes liegen gemäß der ersten Ausführungsform die Anschlüsse für die Netzsteckerkontakte 106, Schnappnasen 120 für die Verrastung mit dem Deckelelement 104 und eine Halterung und Öffnung 122 für eine Zugentlastung 124 des Ausgangsanschlusses 114.

Die Leiterplatte 108, die in einer Richtung 126, die im wesentlichen parallel zur Einsteckrichtung der Netzsteckerkontakte 106 in eine Netzsteckdose verläuft, in den Vergussraum 118 eingeschoben wird, ist in zwei Bereiche unterteilt: einen ersten zu vergießenden Bereich 128, der in die Vergussmasse eintaucht und im vollständig montierten Zustand innerhalb des Vergussraumes 118 des Gehäusegrundelements 102 angeordnet ist, und einen zweiten Bereich 130, auf dem mindestens ein elektronisches Bauteil angeordnet ist, und der unvergossen bleibt.

Gemäß der vorliegenden Erfindung wird die Verbindung zwischen den Ausgangsanschlüssen 114 und den sekundärseitigen zweiten Kontakten 112 beispielsweise durch eine Lötverbindung hergestellt, bevor die Leiterplatte in dem Gehäusegrundelement 102 montiert wird. In einem ersten Arbeitsschritt wird die Zugentlastung 124 in der Halterung 122 befestigt.

Wie bereits erwähnt, wird das Gehäusegrundelement 102 bis zur Markierung 116 mit einer Vergussmasse gefüllt, bevor die Leiterplatte 108 in Richtung 126 eingeschoben wird. Dadurch werden die Netzsteckerkontakte 106 durch die primärseitigen ersten Kontakte 110 elektrisch kontaktiert. Da die Vergussmasse zu diesem Zeitpunkt noch unausgehärtet ist, wird sie überall dort verdrängt, wo dies erforderlich ist. In einem abschließenden Arbeitsschritt wird nun das Deckelelement 104 über den Schaltungsträger 108 geschoben und mit Rastöffnungen 132 an den Rastnasen 120 befestigt. Erfindungsgemäß ist der gesamte Verbindungsbereich der Schnappverbindungen 120, 132 unterhalb der Einfüllmarkierung 116, also innerhalb des Vergussraumes 118 gelegen, und die flüssige Vergussmasse füllt alle Spalten und Öffnungen des Verbindungsbereichs aus.

Das Aushärten kann mittels eines Temperschritts beschleunigt werden und im vollständig ausgehärteten Zustand ist die Verbindung zwischen dem Gehäusegrundelement 102 und dem Deckelelement 104 flüssigkeitsdicht und sicher versiegelt. Weiterhin ist die Zugentlastung 124 sicher und abgedichtet in dem Gehäusegrundelement 102 fixiert. Schließlich sind die primärseitigen Kontakte 110, wie auch die sekundärseitigen Kontakte 112 von der Vergussmasse geschützt, während der Bereich 130 des Schaltungsträgers 108 unvergossen bleibt.

Mit dieser Anordnung lässt sich auf besonders einfache und kostengünstige Weise mindestens die Schutzart IPX7 gemäß DIN EN 60520 erreichen.

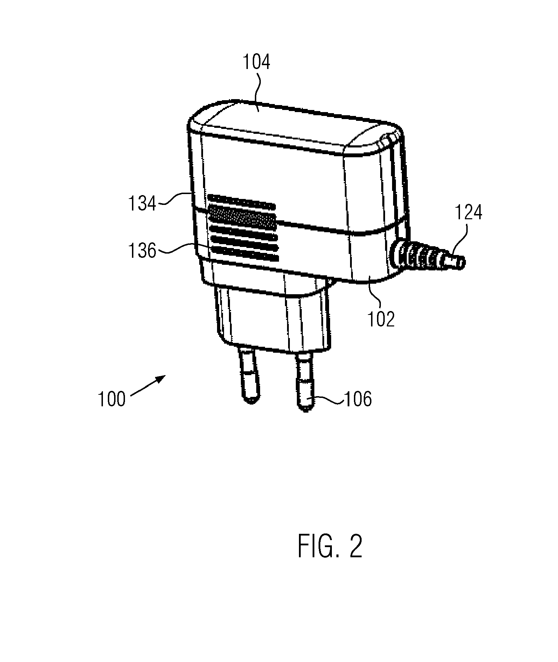

Dadurch, dass das Deckelelement 104 mittels der Rastverbindung 120, 132 mechanisch fixiert und nach der Aushärtung des Gießharzes stoffschlüssig mit dem Gehäusegrundelement 102 verbunden ist, ist die Anordnung nicht nur flüssigkeitsdicht, sondern auch mechanisch sehr stabil. Wie in Fig. 2 in perspektivischer Darstellung gezeigt, ist der gesamte Verbindungsbereich 134 stoffschlüssig durch die innenliegende Vergussmasse versiegelt. Somit kann auch ein Ergreifen des Steckernetzteils in dem Griffbereich 136 durch einen Benutzer nicht zum Trennen dieser Verbindungen führen und es können Auszugskräfte von beispielsweise 89 N oder mehr problemlos erreicht werden.

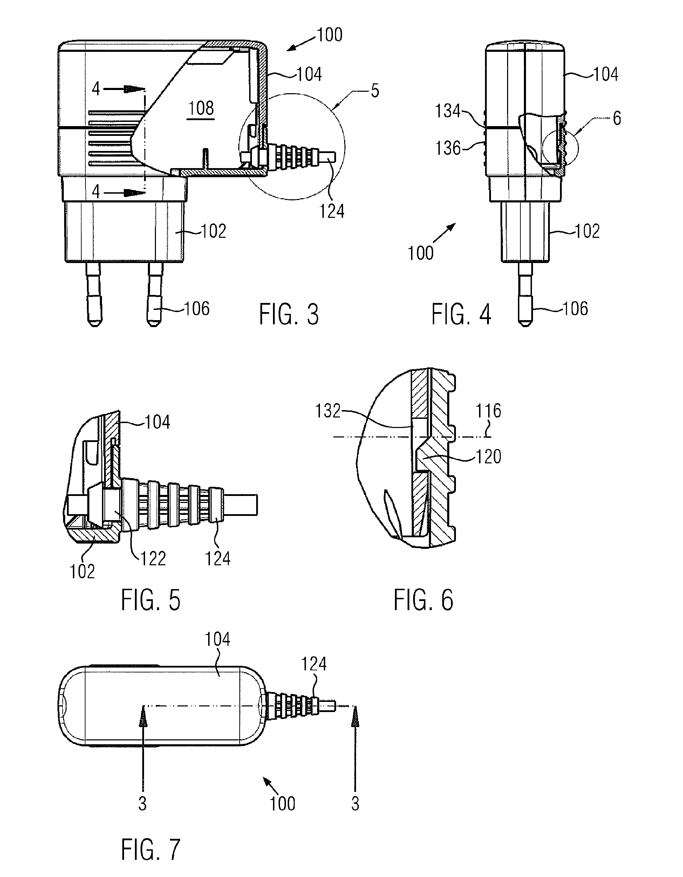

Die Fig. 3 bis 7 zeigen einige teilweise geschnittene Detailaspekte des Steckernetzteils 100 gemäß Fig. 1 und 2. Wie aus der Fig. 3 zusammen mit Fig. 5 ersichtlich ist, ist die Zugentlastung 124 hinterschnittig ausgeführt und kann durch Einstecken in dem Gehäusegrundelement 102 montiert werden. Dies wird zweckmäßigerweise vor dem Einfüllen der Vergussmasse durchgeführt, um die Öffnung gegen ein Ausfließen der Vergussmasse aus dem Vergussraum 118 zu verschließen. Im vollständig montierten Zustand stützt sich die Zugentlastung sowohl gegen das Gehäusegrundelement 102, wie auch gegen das Deckelelement 104 ab und ist darüber hinaus fest durch die Vergussmasse gesichert.

Fig. 6 zeigt als Detailansicht die Rastverbindung zwischen dem Gehäusegrundelement 102 und dem Deckelelement 104. Selbstverständlich können aber auch andersartig ausgestaltete Rastverbindungen zwischen diesen beiden Gehäuseelementen vorgesehen sein, solange diese sich mit Hilfe der unausgehärteten Vergussmasse fixieren lassen.

Nachfolgend soll im Detail mit Bezug auf die Fig. 1 bis 7 nochmals die vollständige Vorgehensweise bei der Herstellung des erfindungsgemäßen Schaltnetzteils gemäß der ersten Ausführungsform erläutert werden.

In einem ersten Schritt wird der Schaltungsträger 108 mit den erforderlichen Bauteilen und Kontakten bestückt. Dabei können die primärseitigen Kontakte 110 durch Federsteckkontakte und die sekundärseitigen zweiten Kontakte 112 durch Lötkontakte gebildet sein. Selbstverständlich können aber auch alle anderen üblichen Verbindungstechniken, z. B. Press-in-Kontakte oder Crimpkontakte, Anwendung finden.

Ein Gehäusegrundelement 102 wird beispielsweise durch ein Spritzgussverfahren hergestellt und dabei mit umspritzten Netzsteckerkontakten 106 versehen. Selbstverständlich können die Netzsteckerkontakte 106 aber auch gemäß anderer bekannter Prozesse an dem Gehäusegrundelement 102 angebracht werden. Weiterhin wird vorzugsweise in einem weiteren Spritzgrußschritt ein Deckelelement 104 gefertigt. Eine mit Ausgangsanschlüssen 114 verbundene Zugentlastung 124 wird in eine entsprechende Öffnung 122 des Gehäusegrundelements 102 eingeschoben und ist dort aufgrund der hinterschnittig ausgestalteten Form mechanisch fixiert.

Nunmehr werden die Ausgangsanschlüsse 114, die als Litzen ausgeführt sein können, mit den zweiten Kontakten 114 verlötet. Selbstverständlich kann aber auch an dieser Stelle ein Steckkontakt vorgesehen sein. Erfindungsgemäß wird nunmehr das Gehäusegrundelement 102 bis zu dem Vergusshöhenniveau 116 mit einem elektrisch isolierenden Gießharz befüllt. Solange das Gießharz noch flüssig ist, wird nunmehr in Richtung 126 der Schaltungsträger in das Gehäusegrundelement 102 eingeschoben. Dabei kontaktieren die primärseitigen ersten Kontakte 110 die Netzsteckerkontakte 106.

Abschließend wird das Deckelelement 104 ebenfalls in Richtung 126 aufgesetzt. Da die Rastnasen 120 unterhalb des Vergusshöhenniveaus 116 liegen, befindet sich auch die fertig geschlossene Rastverbindung innerhalb des Vergussraums 118. Flüssiges Gießharz versiegelt und fixiert die geschlossene Schnappverbindung zwischen dem Gehäusegrundelement 102 und dem Deckelelement 104. Weiterhin wird auch die Verbindung zu der Zugentlastung 124 durch das eingefüllte Gießharz geschützt und versiegelt.

Das Aushärten des Gießharzes kann beispielsweise durch einen Temperschritt beschleunigt werden. Im fertig montierten Zustand sind das Deckelelement 104, wie auch die Zugentlastung 124 durch die Schnappung fixiert und gleichzeitig nach dem Aushärten des Gießharzes stoffschlüssig mit dem Gehäusegrundelement verbunden und somit vollständig abgedichtet. Mechanische Stabilität, wie auch eine für den Betrieb in Feuchträumen geeignete Schutzklasse können auf diese Art und Weise besonders einfach und effektiv erreicht werden.

Da die Platine nur partiell in dem Verguss steckt, sind die elektronischen Bauteile, die sich in dem Bereich 130 befinden, nicht von der Vergussmasse umgeben und Kriechströme können weitgehend verhindert werden.

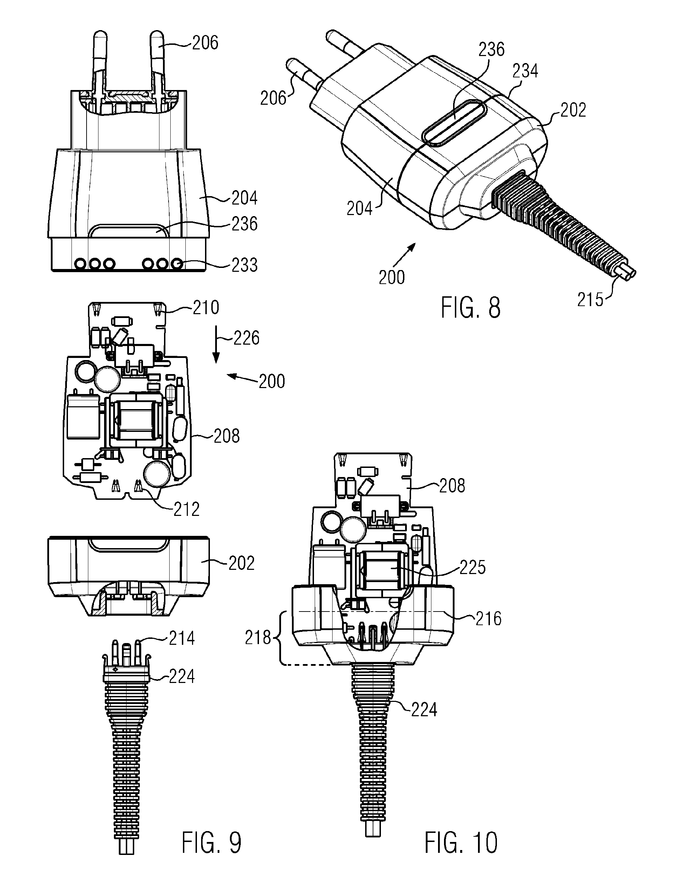

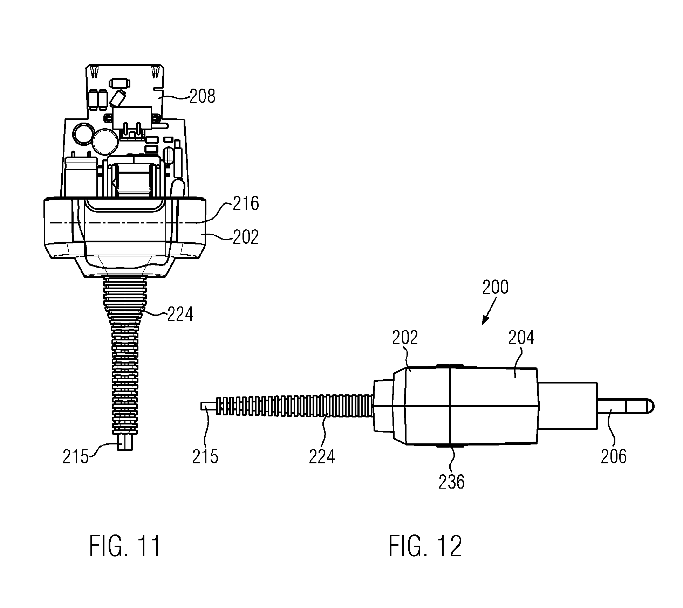

Mit Bezug auf die Figuren 8 bis 12 wird nachfolgend eine zweite vorteilhafte Ausführungsform eines Netzteils 200 gemäß der vorliegenden Erfindung näher erläutert. Die wesentlichen Herstellungsschritte und Grundprinzipien entsprechend denen der ersten Ausführungsform, so dass nachfolgend der Fokus auf den Unterschieden zu der ersten Ausführungsform liegt.

Dieses Steckernetzteil 200 hat im Wesentlichen die Raumform eines Netzsteckers, da die Netzsteckerstifte 206 und die Ausgangsleitung 215 im Wesentlichen entlang einer gemeinsamen Längsachse verlaufen. Diese besonders schmale Form hat den Vorteil größtmöglicher Raumersparnis und erleichtert Verstauen und Transport des Steckernetzteils. Die erfindungsgemäße Teilvergusstechnik, die nachfolgend noch im Detail erläutert werden soll, bietet speziell bei dieser Ausführungsform den Vorteil einer extrem belastbaren Verbindung der beiden Gehäusehälften 202 und 204 bei gleichzeitig geringst möglichem Gewicht.

Wie aus der Explosionszeichnung der Figur 9 erkennbar ist, sind die Netzsteckerstifte 206 bei dem Steckernetzteil 200 nicht an dem Gehäusegrundelement 202 angeordnet, sondern an der dem sekundärseitigen Anschluss gegenüberliegenden Deckelelement 204. Ebenso wie bei der Ausführungsform gemäß der Figuren 1 bis 7 ist das Gehäusegrundelement 202 bei der vorliegenden Ausführungsform so geformt, dass es einen Vergussraum 218 definiert. Die strichpunktiert eingezeichnete Linie 216 gibt das Vergusshöhenniveau an. Neben den erforderlichen elektronischen Bauteilen für die Spannungswandlung von Netzspannung in Niederspannung besitzt der Schaltungsträger 208 sowohl für das Einstecken der Netzsteckerstifte 206 wie auch für die Kontaktierung der Ausgangsanschlüsse 214 jeweils Federkontakte 210, 212.

Die Ausgangsanschlüsse 214 sind in einer Zugentlastung 224 angeordnet, die gemäß der hier gezeigten Ausführungsform mit Hilfe einer Rastverbindung an dem Gehäusegrundelement 202 fixiert wird.

Analog zur ersten Ausführungsform wird wiederum nach dem Montieren der Ausgangsleitung 224, 215 an dem Gehäusegrundelement 202 die Vergussmasse bis etwa zur Linie 216 eingefüllt. Bevor die Vergussmasse aushärtet, wird im nächsten Arbeitsschritt der Schaltungsträger 208 in Richtung 226 in das Gehäusegrundelement 202 so eingeschoben, dass die Federkontakte 212 mit den Ausgangsanschlüssen 214 elektrisch verbunden werden. Wie aus der Darstellung der Figur 10 ersichtlich, bleibt ein Großteil der Bauelemente 225 oberhalb des Einfüllniveaus 216 und damit außerhalb des Vergussraumes 218. Die sekundärseitigen Anschlüsse 214 sind bei der Ausführungsform dagegen innerhalb des Vergussraumes 218 angeordnet.

Der abschließende Montageschritt beinhaltet das Aufstecken des Deckelelements 204. Dies muss ebenfalls geschehen, bevor die Vergussmasse aushärtet, damit eine sichere Versiegelung und mechanisch äußerst stabile Verbindung zwischen dem Gehäusegrundelement 202 und dem Deckelelement 204 zustande kommt. Neben Verrastungen entsprechend der Ausführungsform der Figur 1 bis 7 können an dem Deckelelement gemäß der zweiten Ausführungsform Verankerungsöffnungen 233 angeordnet sein, in welche die noch flüssige Vergussmasse eindringt und dadurch nach dem Aushärten mechanisch stabile Anker zwischen dem Gehäusegrundelement 202 und dem Deckelelement 204 ausbildet.

Beim Aufschieben des Deckelelements 204 wird außerdem der elektrische Kontakt zwischen den Federkontakten 210 und den Netzsteckerstiften 206 geschlossen. Die erforderliche Berührsicherheit und Spannungsfestigkeit wird auf dieser Seite des Steckernetzteils dadurch gewährleistet, dass die Netzsteckerstifte durch Umspritzen in dem Deckelelement integriert sind.

Ein Griffbereich 236 erlaubt es einem Benutzer, das Steckernetzteil 200 sicher aus der Steckdose zu entfernen.

Speziell bei dieser Ausführungsform zeigt sich die verbesserte mechanische Stabilität im Vergleich zu unvergossenen, beispielsweise ultraschallverschweißten Geräten. Selbst wenn ein Benutzer entgegen allen üblichen Empfehlungen an der Ausgangsleitung 215 zieht, um das Steckernetzteil 200 aus der Steckdose zu entfernen, verhindert die Tatsache, dass die Verrastung der Zugentlastung 224 in dem Gehäusegrundelement 202 durch die Vergussmasse zusätzlich fixiert ist, eine Zerstörung des Steckernetzteils durch mechanische Überbeanspruchung.

Obwohl bei den beiden gezeigten Ausführungsformen als Ausgangsanschluss stets eine Niederspannungsleitung gezeigt ist, ist für einen Fachmann selbstverständlich klar, dass jede beliebige Art von Ausgangsanschlüssen an dem Gehäuse des Steckernetzteils angeordnet werden kann. Anstelle des Kabels kann z. B. ein USB (universal serial bus)-Steckverbinder und insbesondere eine USB-Buchse gemäß einem USB-Standard 1.0, 2.0 oder 3.0 vorgesehen sein. Insbesondere für das Aufladen mobiler Endgeräte wie mobiler Telefone ist ein derartiges Steckernetzteil universell einsetzbar, dabei mechanisch stabil und sicher.

## Patentansprüche

1. Netzteil zum Versorgen eines Verbrauchers mit einer Niederspannung, umfassend:
mindestens einen Netzsteckerkontakt (106, 206), der mit einer Netzspannung verbindbar ist;
mindestens einen Ausgangsanschluss (114, 214) zum Ausgeben der Niederspannung;
eine Spannungswandlereinheit mit mindestens einem elektronischen Bauelement zum Umwandeln der Netzspannung in die Niederspannung;
wobei das Netzteil (100, 200) ein Gehäuse mit einem Gehäusegrundelement (102, 202) und einem Deckelelement (104, 204) aufweist und wobei der mindestens eine Netzsteckerkontakt (106, 206) in dem Gehäusegrundelement (102) oder dem Deckelelement (204) so gehalten ist, dass er in eine Netzsteckdose einsteckbar ist,
wobei die Spannungswandlereinheit auf einem Schaltungsträger (108, 208) montiert ist,
der in einer Steckrichtung (126) des Netzsteckerkontakts (106) so in dem Gehäusegrundelement (102, 202) angeordnet ist, dass ein definierter zu isolierender erster Bereich (128) des Schaltungsträgers (108, 208) in einem von Wandungen des Gehäusegrundelements (102, 202) umschlossenen Vergussraum (118, 218) aufgenommen ist,
**dadurch gekennzeichnet, dass**
der Vergussraum (118, 218) des Gehäusegrundelements (102) mit einer elektrisch isolierenden Vergussmasse gefüllt ist, so dass der zu isolierende erste Bereich (128) des Schaltungsträgers (108) von der Vergussmasse abgedeckt ist, während ein zweiter Bereich (130) des Schaltungsträgers, auf dem das mindestens eine elektronische Bauelement angeordnet ist, unvergossen ist.

2. Netzteil nach Anspruch 1, wobei erste Kontakte (110) zum elektrischen Kontaktieren des mindestens einen Netzsteckerkontakts (106) in dem ersten Bereich (128) des Schaltungsträgers (108) angeordnet sind.

3. Netzteil nach Anspruch 2, wobei der mindestens eine erste Kontakt (110) über eine Steckverbindung mit dem mindestens einen Netzsteckerkontakt (106) verbunden ist.

4. Netzteil nach einem der vorhergehenden Ansprüche, wobei zweite Kontakte (112) zum elektrischen Kontaktieren des mindestens einen Ausgangsanschlusses (114) in dem ersten Bereich (128) des Schaltungsträgers (108) angeordnet sind.

5. Netzteil nach einem der vorhergehenden Ansprüche, wobei ein Verbindungsbereich (134) zwischen dem Gehäusegrundelement (102) und dem Deckelelement (104) in dem Vergussraum (118) angeordnet ist, so dass im vollständig montierten Zustand der Verbindungsbereich durch die Vergussmasse versiegelt ist.

6. Netzteil nach Anspruch 5, wobei in dem Verbindungsbereich eine Rastverbindung (120, 132) vorgesehen ist.

7. Netzteil nach einem der vorhergehenden Ansprüche, wobei weiterhin an dem Gehäusegrundelement (102) in dem Bereich des Vergussraums (118) eine Halterung (122) zum Aufnehmen einer Zugentlastung (124) für den Ausgangsanschluss (114) vorgesehen ist.

8. Verfahren zum Herstellen eines Netzteils zum Versorgen eines Verbrauchers mit einer Niederspannung, umfassend die folgenden Schritte:
Bereitstellen eines Gehäusegrundelements und eines Deckelelements eines Gehäuses;
Anordnen mindestens eines Netzsteckerkontakts in dem Gehäusegrundelement oder dem Deckelelement, so dass er in eine Netzsteckdose einsteckbar ist;
Montieren einer Spannungswandlereinheit auf einem Schaltungsträger;
Einfüllen einer elektrisch isolierenden Vergussmasse in einen von Wandungen des Gehäusegrundelements umschlossenen Vergussraum;
Verschließen des Gehäuses durch Montieren des Deckelelements;
**dadurch gekennzeichnet, dass** das Verfahren weiterhin folgenden Schritt umfasst:
Montieren des Schaltungsträgers mit mindestens einem elektronischen Bauelement in dem Gehäusegrundelement in einer solchen Ausrichtung mit Bezug auf eine Steckrichtung des Netzsteckerkontakts, dass ein definierter zu isolierender erster Bereich des Schaltungsträgers in dem Vergussraum aufgenommen ist, so dass der zu isolierende erste Bereich des Schaltungsträgers von der Vergussmasse abgedeckt ist, während ein zweiter Bereich des Schaltungsträgers, auf dem das mindestens eine elektronische Bauelement angeordnet ist, unvergossen bleibt.

9. Verfahren nach Anspruch 8, wobei mindestens ein erster Kontakt zum elektrischen Kontaktieren des mindestens einen Netzsteckerkontakts in dem ersten Bereich des Schaltungsträgers angeordnet sind und das Kontaktieren durch Einschieben des Schaltungsträgers in das Gehäusegrundelement erfolgt.

10. Verfahren nach Anspruch 8 oder 9, wobei mindestens ein zweiter Kontakt zum elektrischen Kontaktieren des mindestens einen Ausgangsanschlusses in dem ersten Bereich des Schaltungsträgers angeordnet sind und der mindestens eine Ausgangsanschluss mit dem zweiten Kontakt verbunden wird, bevor der Schaltungsträger in das Gehäusegrundelement eingeschoben wird.

11. Verfahren nach Anspruch 10, wobei der mindestens eine zweite Kontakt über eine Lötverbindung mit dem mindestens einen Ausgangsanschluss verbunden wird.

12. Verfahren nach einem der Ansprüche 8 bis 11, wobei ein Verbindungsbereich zwischen dem Gehäusegrundelement und dem Deckelelement in dem Vergussraum angeordnet ist, so dass im vollständig montierten Zustand der Verbindungsbereich durch die Vergussmasse versiegelt ist.

13. Verfahren nach Anspruch 12, wobei in dem Verbindungsbereich eine Rastverbindung vorgesehen ist.

14. Verfahren nach Anspruch 12 oder 13, wobei das Deckelelement mit dem Gehäusegrundelement verbunden wird, nachdem die Vergussmasse eingefüllt wurde und bevor diese vollständig ausgehärtet ist.

15. Verfahren nach einem der Ansprüche 8 bis 14, wobei weiterhin an dem Gehäusegrundelement in dem Bereich des Vergussraums eine Halterung zum Aufnehmen einer Zugentlastung für den Ausgangsanschluss vorgesehen ist, und die Zugentlastung montiert wird, bevor die Vergussmasse eingefüllt wird.

## Claims

1. Power supply unit for supplying a consumer with a low voltage, comprising:
at least one power plug contact (106, 206) connectable to a supply voltage;
at least one output lead (114, 214) for outputting the low voltage;
a voltage transformer unit comprising at least one electronic component for transforming the supply voltage to the low voltage;
wherein the power supply unit (100, 200) comprises a casing with a casing base element (102, 202) and a lid element (102, 202), and wherein the at least one power plug contact (106, 206) is held in the casing base element (102) or in the lid element (204) in such a way that it can be plugged into a power socket,
wherein the voltage transformer unit is mounted on a circuit carrier (108, 208), which is arranged in the casing base element (102, 202), in a plug-in direction (126) of the power plug contact (106), in such a way that a defined first region (128) of the circuit carrier (108, 208), which is to be insulated, is received in a casting space (118, 218) that is enclosed by walls of the casing base element (102, 202),
**characterized in that**
the casting space (118, 218) of the casing base element (102) is filled with an electrically insulating casting compound, so that the first region (128) of the circuit carrier (108), which is to be insulated, is covered by the casting compound, while a second region (130) of the circuit carrier, on which the at least one electronic component is arranged, is not encapsulated.

2. Power supply unit according to claim 1, wherein first contacts (110) for electrically contacting the at least one power plug contact (106) are arranged in the first region (128) of the circuit carrier (108).

3. Power supply unit according to claim 2, wherein the at least one first contact (110) is connected to the at least one power plug contact (106) by a plug-type connection.

4. Power supply unit according to one of the preceding claims, wherein second contacts (112) for electrically contacting the at least one output lead (114) are arranged in the first region (128) of the circuit carrier (108).

5. Power supply unit according to one of the preceding claims, wherein a connection area (134) is arranged between the casing base element (102) and the lid element (104) in the casting space (118), so that the connection area is sealed by the casting compound in the fully mounted state.

6. Power supply unit according to claim 5, wherein a snap-in connection (120, 132) is provided in the connection area.

7. Power supply unit according to one of the preceding claims, wherein further a holder (122) for receiving a strain relief (124) for the output lead (114) is provided on the casing base element (102) in the area of the casting space (118).

8. Method for manufacturing a power supply unit for supplying a consumer with a low voltage, comprising the following steps:
providing a casing base element and a lid element of a casing;
arranging at least one power plug contact in the casing base element or the lid element,
so that it can be plugged into a power socket;
mounting a voltage transformer unit on a circuit carrier;
filling an electrically insulating casting compound into a casting space enclosed by walls of the casing base element;
closing the casing by mounting the lid element;
**characterized in that** the method further comprises the following step:
mounting the circuit carrier comprising at least one electronic component in the casing base element in such an orientation with respect to a plug-in direction of the power plug contact that a defined first region of the circuit carrier, which is to be insulated, is received in the casting space, so that the first region of the circuit carrier, which is to be insulated, is covered by the casting compound, while a second region of the circuit carrier, on which the at least one electronic component is arranged, remains non-encapsulated.

9. Method according to claim 8, wherein at least a first contact for electrically contacting the at least one power plug contact is arranged in the first region of the circuit carrier and the contacting is accomplished by inserting the circuit carrier into the casing base element.

10. Method according to claim 8 or 9, wherein at least a second contact for electrically contacting the at least one output lead is arranged in the first region of the circuit carrier and the at least one output lead is connected to the second contact before the circuit carrier is inserted into the casing base element.

11. Method according to claim 10, wherein the at least one second contact is connected to the at least one output lead by a soldered joint.

12. Method according to one of claims 8 to 11, wherein a connection area is arranged between the casing base element and the lid element in the casting space, so that, in the fully mounted state, the connection area is sealed by the casting compound.

13. Method according to claim 12, wherein a snap-in connection is provided in the connection area.

14. Method according to claim 12 or 13, wherein the lid element is connected to the casing base element after the casting compound was filled in and before the casting compound has completely hardened.

15. Method according to one of claims 8 to 14, wherein further a holder for receiving a strain relief for the output lead is provided on the casing base element in the area of the casting space and the strain relief is mounted before the casting compound is filled in.

## Revendications

1. Bloc d'alimentation secteur destiné à alimenter un récepteur-consommateur avec une basse tension, comprenant :
au moins un contact de fiche secteur (106, 206), qui peut être relié à une tension de secteur ;
au moins un raccord de branchement de sortie (114, 214) pour délivrer la basse tension ;
une unité de convertisseur de tension avec au moins un composant électronique pour convertir la tension du secteur en la basse tension ;
le bloc d'alimentation secteur (100, 200) comprenant un boitier avec un élément de base de boitier (102, 202) et
un élément de couvercle (104, 204), et ledit au moins un contact de fiche secteur (106, 206) étant maintenu dans l'élément de base de boitier (102) ou dans l'élément de couvercle (204) de manière à pouvoir être enfiché dans une prise du secteur,
l'unité de convertisseur de tension étant montée sur un support de circuit (108, 208), qui, dans une direction d'enfichage (126) du contact de fiche secteur (106), est agencé dans l'élément de base de boitier (102, 202) de manière à ce qu'une première zone définie (128) du support de circuit (108, 208), à isoler, soit reçue dans un compartiment d'enrobage (118, 218) entouré par des parois de l'élément de base de boitier (102, 202),
**caractérisé en ce que**
le compartiment d'enrobage (118, 218) de l'élément de base de boitier (102, 202) est rempli d'une masse d'enrobage électriquement isolante, de sorte que la première zone (128) du support de circuit (108, 208), à
isoler, est recouverte par la masse d'enrobage, tandis qu'une deuxième zone (130) du support de circuit, sur laquelle est agencé ledit au moins un composant électronique, n'est pas enrobée.

2. Bloc d'alimentation secteur selon la revendication 1, dans lequel des premiers contacts (110) pour assurer le contact de connexion électrique avec ledit au moins un contact de fiche secteur (106), sont agencés dans la première zone (128) du support de circuit (108).

3. Bloc d'alimentation secteur selon la revendication 2, dans lequel ledit au moins un premier contact (110) est relié par une liaison à enfichage audit au moins un contact de fiche secteur (106).

4. Bloc d'alimentation secteur selon l'une des revendications précédentes, dans lequel des deuxièmes contacts (112) pour assurer le contact de connexion électrique avec ledit au moins un raccord de branchement de sortie (114), sont agencés dans la première zone (128) du support de circuit (108).

5. Bloc d'alimentation secteur selon l'une des revendications précédentes, dans lequel une zone d'assemblage (134) entre l'élément de base de boitier (102) et l'élément de couvercle (104) est agencée dans le compartiment d'enrobage (118), de sorte que dans l'état complètement monté, la zone d'assemblage est scellée par la masse d'enrobage.

6. Bloc d'alimentation secteur selon la revendication 5, dans lequel une liaison par encliquetage (120, 132) est prévue dans la zone d'assemblage.

7. Bloc d'alimentation secteur selon l'une des revendications précédentes, dans lequel il est prévu, par ailleurs, sur l'élément de base de boitier (102), dans la zone du compartiment d'enrobage (118), un support de maintien (122) destiné à recevoir un système de décharge en traction (124) pour le raccord de branchement de sortie (114).

8. Procédé de fabrication d'un bloc d'alimentation secteur destiné à alimenter un récepteur-consommateur avec une basse tension, comprenant les étapes suivantes :
élaboration d'un élément de base de boitier et d'un élément de couvercle d'un boitier ;
agencement d'au moins un contact de fiche secteur dans l'élément de base de boitier ou l'élément de couvercle,
de manière à ce qu'il puisse être enfiché dans une prise du secteur ;
montage d'une unité de convertisseur de tension sur un support de circuit ;
coulée d'une masse d'enrobage électriquement isolante dans un compartiment d'enrobage entouré par des parois de l'élément de base de boitier ;
fermeture du boitier par montage de l'élément de couvercle ;
**caractérisé en ce que** le procédé comprend, en outre, l'étape suivante :
montage du support de circuit avec au moins un composant électronique dans l'élément de base de boitier dans une orientation telle, par rapport à une direction d'enfichage du contact de fiche secteur, qu'une première zone définie du support de circuit, à isoler, soit logée dans le compartiment d'enrobage, de sorte que la première zone du support de circuit, à isoler, est recouverte par la masse d'enrobage, tandis qu'une deuxième zone du support de circuit, sur laquelle est agencé ledit au moins un composant électronique, reste non enrobée.

9. Procédé selon la revendication 8, d'après lequel au moins un ou plusieurs premiers contacts pour assurer le contact de connexion électrique avec ledit au moins un contact de fiche secteur, sont agencés dans la première zone du support de circuit, et l'établissement du contact s'effectue par insertion du support de circuit dans l'élément de base de boitier.

10. Procédé selon la revendication 8 ou la revendication 9, d'après lequel au moins un ou plusieurs deuxièmes contacts pour assurer le contact de connexion électrique avec ledit au moins un raccord de branchement de sortie, sont agencés dans la première zone du support de circuit, et ledit au moins un raccord de branchement de sortie est relié au deuxième contact avant l'insertion du support de circuit dans l'élément de base de boitier.

11. Procédé selon la revendication 10, d'après lequel ledit au moins un deuxième contact est relié audit au moins un raccord de branchement de sortie par l'intermédiaire d'une liaison par brasage ou soudage.

12. Procédé selon l'une des revendications 8 à 11, d'après lequel une zone d'assemblage entre l'élément de base de boitier et l'élément de couvercle est agencée dans le compartiment d'enrobage, de sorte que dans l'état entièrement monté, la zone d'assemblage est scellée par la masse d'enrobage.

13. Procédé selon la revendication 12, d'après lequel dans la zone d'assemblage est prévue une liaison par encliquetage.

14. Procédé selon la revendication 12 ou la revendication 13, d'après lequel l'élément de couvercle est assemblé à l'élément de base de boitier après avoir effectué la coulée de remplissage de la masse d'enrobage et avant que celle-ci ne soit totalement solidifiée.

15. Procédé selon l'une des revendications 8 à 14, d'après lequel il est prévu, par ailleurs, sur l'élément de base de boitier, dans la zone du compartiment d'enrobage, un support de maintien destiné à recevoir un système de décharge en traction pour le raccord de branchement de sortie, et le système de décharge en traction est monté avant la coulée de remplissage de la masse d'enrobage.
